# EUROPÄISCHE PATENTSCHRIFT

(11) **EP 3 015 197 B1**
(45) Veröffentlichungstag und Bekanntmachung des Hinweises auf die Patenterteilung: **08.03.2017**
(21) Anmeldenummer: 14191026.5
(22) Anmeldetag: 30.10.2014
(51) Int. Cl.: B22F 3/105, B28B 1/00, B29C 67/00

(54) **Vorrichtung zur Herstellung oder Reparatur eines dreidimensionalen Objekts**
Device for producing or repairing a three-dimensional object
Dispositif de fabrication ou de réparation d'un objet tridimensionnel

(43) Veröffentlichungstag der Anmeldung: 04.05.2016
(73) Patentinhaber: MTU Aero Engines AG, 80995 München (DE)
(72) Erfinder: Schlick, Georg, 80809 München (DE); Fisser, Maximilian, 83684 Tegernsee (DE); Ladewig, Alexander, 83707 Bad Wiessee (DE); Schlothauer, Steffen, 85253 Erdweg (DE); Heß, Thomas, 81541 München (DE); Jakimov, Andreas, Dr., 81245 München (DE)

(56) Entgegenhaltungen:
- EP-A1- 2 492 084
- WO-A1-2014/199150
- WO-A2-2014/202413
- DE-A1- 10 342 883
- DE-A1-102004 031 881
- DE-C1- 19 853 947

## Beschreibung

Die Erfindung betrifft eine Vorrichtung zur Herstellung oder Reparatur eines dreidimensionalen Objekts gemäß dem Oberbegriff des Anspruchs 1.

Verfahren und Vorrichtungen zur Herstellung von dreidimensionalen Objekten, insbesondere von Bauteilen sind in einer großen Vielzahl bekannt. Insbesondere sind generative Fertigungsverfahren (sog. Rapid Manufacturing- bzw. Rapid Prototyping-Verfahren) bekannt, bei denen das dreidimensionale Objekt beziehungsweise das Bauteil durch pulverbettbasierte, additive Fertigungsverfahren schichtweise aufgebaut wird. Vorwiegend metallische Bauteile können beispielsweise durch Laser- bzw. Elektronenstrahlschmelz- oder -sinterverfahren hergestellt werden. Dabei wird zunächst schichtweise mindestens ein pulverförmiger Bauteilwerkstoff auf eine Bauteilplattform im Bereich einer Aufbau- und Fügezone der Vorrichtung aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Hochenergiestrahls, zum Beispiel eines Elektronen- oder Laserstrahls zugeführt wird. Der Hochenergiestrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Danach werden die genannten Schritte bis zur endgültigen Fertigstellung des Bauteils wiederholt. Vergleichbare additive Verfahren sind zur Herstellung von Keramik- oder Kunststoffelementen bekannt.

Aus dem Stand der Technik sind insbesondere auch generative Herstellverfahren für die Herstellung von Bauteilen einer Strömungsmaschine, wie beispielsweise von Bauteilen eines Flugtriebwerks oder einer Gasturbine bekannt, z.B. das in der DE 10 2009 051 479 A1 beschriebene Verfahren bzw. eine entsprechende Vorrichtung zur Herstellung eines Bauteils einer Strömungsmaschine. Bei diesem Verfahren wird durch schichtweisen Auftrag von mindestens einem pulverförmigen Bauteilwerkstoff auf einer Bauteilplattform im Bereich einer Aufbau- und Fügezone sowie schichtweises und lokales Schmelzen oder Sintern des Bauteilwerkstoffs mittels im Bereich der Aufbau- und Fügezone zugeführter Energie ein entsprechendes Bauteil hergestellt. Die Zufuhr der Energie erfolgt hierbei über Laserstrahlen, wie beispielsweise CO₂-Laser Nd:YAG-Laser, Yb-Faserlaser sowie Diodenlaser, oder durch Elektronenstrahlen.

Der Abtransport von Prozessnebenprodukten wird bei den gattungsgemäßen Vorrichtungen und Verfahren üblicherweise durch eine Schutzgasströmung umgesetzt, die meist über die genannte Bauteilplattform beziehungsweise eine Aufbau- und Fügezone geführt wird, siehe dazu z.B. EP2492084 A1, DE10342883 A1, DE19853947 C1 und DE102004031881 A1.

Bekannte Vorrichtungen zur additiven Fertigung von dreidimensionalen Objekten umfassen dabei mehrere Einströmdüsen für das Schutzgas sowie mindestens eine Absaugdüse. Insbesondere werden Einströmdüsen verwendet, die einerseits seitlich über der Aufbau- und Fügezone und andererseits in einem der Aufbau- und Fügezone gegenüberliegenden oberen Bereich der Vorrichtung angeordnet sind. Die letztgenannte obere Einströmdüse hat aufgrund ihrer Geometrie und Lage direkten Einfluss auf den Volumenstrom und das Strömungsfeld des Schutzgasstroms im Bauraum beziehungsweise der Prozesskammer über der Bauteilplattform. Dabei kann die mittige Anordnung der oberen Einströmdüse im oberen Bereich der Vorrichtung zu einem inhomogenen Strömungsfeld und somit zu einem mangelnden Abtransport von Prozessnebenprodukten führen. Die Absaugdüse hat ebenfalls Einfluss auf das Strömungsfeld des Schutzgases. Bekannte Geometrien von Absaugdüsen können zu ungleichmäßigen Strömungsgeschwindigkeiten über die Düsenbreite führen. Zudem ist die Strömungsgeschwindigkeit an der Absaugdüse bei bekannten Vorrichtungen deutlich langsamer als die Strömungsgeschwindigkeit unmittelbar nach der Einströmdüse. Letzteres ist der Tatsache geschuldet, dass bei bekannten Vorrichtungen die Summe der strömungstechnisch relevanten Querschnittsflächen an den Eingängen der Absaugdüse, das heißt den Öffnungen der Absaugdüse, mindestens dreimal so groß ist, wie die Summe der strömungstechnisch relevanten Querschnittsflächen an den Ausgängen beziehungsweise Einströmöffnungen der oberen und unteren Einströmdüsen zusammen. Da aufgrund des Volumenstroms und der Querschnitte der Einström- und Absaugdüsen von einer Unterschallströmung und somit von inkompressiblen Strömungen ausgegangen werden kann, ergibt sich das Verhältnis der Strömungsgeschwindigkeiten an den Ein- und Auslassdüsen über die Verhältnisse der genannten strömungstechnisch relevanten Querschnittsflächen. Die genannten niedrigen Strömungsgeschwindigkeiten sowie das insgesamt inhomogene Strömungsfeld innerhalb der Bauräume der bekannten Vorrichtungen führen zu einem mangelnden Abtransport von Prozessnebenprodukten. So entstehen beispielsweise bei bekannten Vorrichtungen zum selektiven Laserstrahlschmelzen in bestimmten Bauraumbereichen vermehrt Fehler im Prozess und im Bauteil, sodass diese Bereiche für die Produktion von Serienbauteilen nicht geeignet sind. Diese Fehler entstehen insbesondere aufgrund des genannten mangelnden Abtransports von Prozessnebenprodukten. Bei Prozessnebenprodukten kann es sich bei dem selektiven Laserstrahlschmelzen insbesondere um Schmauch (Schweißrauch), Spritzer, Auswurf und verblasenes Pulver handeln. Besonders Schmauch führt zu einer Defokussierung und Abschirmung des Laserstrahls. Dadurch sinkt die auf den zu verschmelzenden Werkstoff einzubringende Energiedichte und das Pulver wird nur mangelhaft aufgeschmolzen. Es erfolgt eine mangelnde Anbindung an das Bauteil, wodurch wiederum Bindefehler im Bauteil entstehen können. Spritzer und Auswurf erhöhen zudem die Schichtdicke lokal deutlich. Dadurch können wiederum eine mangelnde Anbindung an das Bauteil und Bindefehler entstehen.

Aufgabe der vorliegenden Erfindung ist es daher, eine Vorrichtung der eingangs genannten Art zu schaffen, die einen verbesserten Abtransport von bei additiven Fertigungsverfahren entstehenden Prozessnebenprodukten aus einem Bereich einer Aufbau- und Fügezone gewährleistet. Zudem besteht die Aufgabe, eine Absaugdüse und eine Einströmdüse zu schaffen, die ebenfalls einen verbesserten Abtransport von bei additiven Fertigungsverfahren entstehenden Prozessnebenprodukten aus einem Bereich einer Aufbau- und Fügezone einer Vorrichtung zur generativen Herstellung oder Reparatur eines dreidimensionalen Objekts gewährleisten.

Diese Aufgabe wird erfindungsgemäß durch eine Vorrichtung zur Herstellung oder Reparatur eines dreidimensionalen Objekts mit den Merkmalen des Patentanspruchs 1 gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Vorrichtung anzusehen sind.

Ein erster Aspekt der Erfindung betrifft eine Vorrichtung zur Herstellung oder Reparatur eines dreidimensionalen Objekts umfassend mindestens einen Bauraum für ein schichtweises, aufeinderfolgendes Verfestigen mindestens eines verfestigbaren Werkstoffs in vordefinierten Bereichen zum schichtweisen Aufbau eines dreidimensionalen Objekts oder zur schichtweisen Reparatur einzelner Bereiche des dreidimensionalen Objekts innerhalb des Bauraums und mindestens eine Einströmdüse sowie mindestens eine Absaugdüse für ein Prozessgas, wobei die Einströmdüse und die Absaugdüse derart angeordnet sind, dass ein zumindest teilweise über einer im Bauraum ausgebildeten Aufbau- und Fügezone einer Bauplattform verlaufender Gasstrom ausgebildet wird. Zudem beträgt das Verhältnis der Summen der strömungstechnisch relevanten Querschnittsflächen der mindestens einen Absaugdüse zu der mindestens einen Einströmdüse 2,5 : 1 (2,5 zu 1) bis 0,3 : 1 (0,3 zu 1). Das Verhältnis der Summen der strömungstechnisch relevanten Querschnittsflächen der mindestens einen Absaugdüse zu der mindestens einen Einströmdüse kann aber auch 2 : 1 bis 0,5 : 1, insbesondere 1,3 : 1 bis 0,7 : 1 betragen. Durch die im Vergleich zum Stand der Technik deutliche Verringerung des Verhältnisses der Summen der strömungstechnisch relevanten Querschnittsflächen, das heißt insbesondere das Verhältnis der Summe der Flächen der Absaugöffnungen der Absaugdüse zu der Summe der Flächen der Einströmöffnungen der Einströmdüse, wird eine deutliche Erhöhung der Strömungsgeschwindigkeit des Gasstroms im Bauraum erzielt. Dadurch ergibt sich eine Verbesserung des Abtransports von Prozessnebenprodukten bei der generativen Herstellung oder Reparatur des dreidimensionalen Objekts. Zudem ergibt sich ein homogeneres Strömungsfeld, was wiederum zur deutlichen Verbesserung des Abtransports der Prozessnebenprodukte beiträgt. Insbesondere sind dabei die mindestens eine Absaugdüse und die mindestens eine Einströmdüse derart ausgebildet, dass das Verhältnis der effektiven Strömungsgeschwindigkeiten der mindestens einen Absaugdüse zu der mindestens einen Einströmdüse 2,5 : 1 bis 0,3 : 1 beträgt. In vorteilhaften Ausgestaltungen der Erfindung kann das Verhältnis der effektiven Strömungsgeschwindigkeiten der mindestens einen Absaugdüse zu der mindestens einen Einströmdüse auch 2 : 1 bis 0,5 : 1, insbesondere 1,3 : 1 bis 0,7 : 1 betragen. Das Verhältnis der Summen der strömungstechnisch relevanten Querschnittsflächen der Absaugdüsen zu den Einströmdüsen sowie das Verhältnis der effektiven Strömungsgeschwindigkeiten der Absaugdüsen zu den Einströmdüsen beträgt bei Vorrichtungen gemäß dem Stand der Technik 3 : 1 (3 zu 1) und mehr. Durch den verbesserten Abtransport von Prozessnebenprodukten ist zudem gewährleistet, dass beispielsweise ein Hochenergiestrahl, wie ein Laserstrahl, nicht mehr durch die entstehenden Prozessnebenprodukte abgeschirmt und defokussiert wird. Dies führt zu einer deutlichen Qualitätsverbesserung bei der Herstellung oder Reparatur des dreidimensionalen Objekts. Das eingesetzte Prozessgas ist insbesondere ein Schutz- oder Inertgas. Der Volumenstrom des Prozessgases innerhalb des Bauraums beträgt erfindungsgemäß 10 bis 200 m³/h, insbesondere 30 bis 150 m³/h oder 50 bis 80 m³/h. Die Strömungsgeschwindigkeiten betragen erfindungsgemäß unmittelbar nach der Einströmdüse und vor der Absaugdüse 0,5 bis 10 m/s, insbesondere 1,0 bis 8,0 m/s oder 2,0 bis 4,0 m/s. Derartige Volumenströme und Strömungsgeschwindigkeiten werden erfindungsgemäß durch die Ausgestaltung der strömungstechnisch relevanten Querschnittsflächen der Absaugdüse und der Einströmdüse und insbesondere durch das Verhältnis der Summen der strömungstechnisch relevanten Querschnittsflächen erzielt. Insbesondere werden Absaugdüsen bereitgestellt, die im Vergleich zu herkömmlichen Absaugdüsen deutlich geringere Querschnittsflächen der Absaugöffnungen aufweisen. So kann zum Beispiel eine Verkleinerung der genannten Querschnittsfläche um ca. 66 % erfolgen, wodurch die Strömungsgeschwindigkeit an der Absaugung um das ca. Dreifache erhöht wird. Die Strömungsgeschwindigkeit an den Absaugdüsen wird somit der Strömungsgeschwindigkeit an den Einströmdüsen erfindungsgemäß angenähert und angeglichen. Bei dem im Vorhergehenden beschriebenen Bauraum der Vorrichtung handelt es sich üblicherweise um eine Prozesskammer zur Durchführung des generativen Herstellungs- oder Reparaturverfahrens. Bei dem herzustellenden oder zu reparierenden dreidimensionalen Objekt kann es sich um ein Bauteil oder einen Bauteilbereich eines Flugtriebwerks, insbesondere eines Verdichters oder einer Turbine handeln. Der verwendete Werkstoff kann pulverförmig, flüssig oder pastös ausgebildet sein und besteht üblicherweise aus Metall, einer Metalllegierung, Keramik oder Kunststoff oder einer Mischung daraus.

In weiteren Ausgestaltungen der erfindungsgemäßen Vorrichtung umfasst die Absaugdüse mindestens zwei Absaugöffnungen, wobei die Absaugöffnungen mit zugehörigen Absaugkanälen strömungsleitend verbunden sind und die Absaugkanäle Wandflächen aufweisen, die in Strömungsrichtung einen zumindest abschnittsweise gewölbten Konturverlauf aufweisen. Durch das Vermeiden von Ecken und Kanten innerhalb des Strömungskanals ergibt sich wiederum eine Erhöhung der Strömungsgeschwindigkeit, da der Strömungswiderstand innerhalb des Strömungskanals durch den gewölbten Konturverlauf der Wandflächen, das heißt entsprechende Abrundungen deutlich reduziert wird. Des Weiteren umfasst die Absaugdüse mindestens zwei Absaugöffnungen, wobei die zugehörigen Absaugkanäle zumindest abschnittsweise voneinander getrennt sind. Dabei können die Absaugkanäle derart ausgebildet und dimensioniert sein, dass durch jeden Absaugkanal ein ungefähr gleicher Gasvolumenstrom fließt. Auch durch diese Maßnahme ergeben sich einerseits eine erhöhte Strömungsgeschwindigkeit in den Strömungskanälen und andererseits ein homogeneres Strömungsfeld im Bauraum der Vorrichtung. Des Weiteren besteht die Möglichkeit, dass der Absaugkanal derart ausgebildet ist, dass der abgesaugte Gasstrom in einer Ebene über und/oder unter der Abschnittsöffnung abgeleitet wird. Hierzu wird die Strömung nach dem Einlass in den Absaugkanal erst nach oben und/oder unten und dann zur Seite geleitet. Durch diese vorteilhafte Ausgestaltung ergibt sich eine kompaktere Bauweise der Absaugdüse, was zu einer konstruktiven Vereinfachung der Vorrichtung insgesamt führt. Des Weiteren besteht die Möglichkeit, dass die Absaugdüse eine Vielzahl von Absaugöffnungen umfasst, wobei zur Verringerung der strömungstechnisch relevanten Querschnittsfläche an einem Teilbereich der Absaugöffnungen mindestens eine Abdeckung angeordnet ist. Die Abdeckung kann dabei als separates Bauteil ausgebildet sein, es ist aber auch möglich den genannten Teilbereich der Absaugöffnungen mit einer entsprechenden Klebefolie zu bedecken. Insgesamt erfolgt bei der Konstruktion der erfindungsgemäßen Absaugdüsen eine deutliche Verringerung der Summe der strömungstechnisch relevanten Querschnittsflächen, insbesondere der Fläche der entsprechenden Absaugöffnungen der Absaugdüse. Durch die erfindungsgemäße Ausgestaltung der Absaugdüsen ergibt sich eine deutliche Erhöhung der Strömungsgeschwindigkeit des Gasstroms an der Absaugung, sodass im Bauraum der Vorrichtung entstehende Prozessnebenprodukte ohne Weiteres abtransportiert werden können.

In weiteren vorteilhaften Ausgestaltungen der erfindungsgemäßen Vorrichtung umfasst die Vorrichtung mindestens eine in einem der Bauplattform gegenüberliegenden oberen Bereich und/oder einer Seitenwand der Vorrichtung angeordnete obere Einströmdüse und/oder mindestens eine in einer Seitenwand der Vorrichtung über der Bauplattform und unterhalb der oberen Einströmdüse angeordnete untere Einströmdüse. Je nach Volumen des Bauraums können die Einströmdüsen vorteilhafterweise in unterschiedlichen Bereichen und auch in einer benötigten Anzahl zur Erzielung eines entsprechenden Strömungsvolumens des Prozessgases angeordnet werden. Dabei kann die obere Einströmdüse mindestens zwei Einströmöffnungen umfassen, wobei die Einströmöffnungen durch mindestens eine Separatorwand voneinander getrennt sind. Der ankommende Gasstrom des Prozessgases wird in der Einströmdüse aufgeteilt und in einzelne Einströmkanäle geleitet. Die Aufteilung der Gasströmung kann dabei beispielhaft durch horizontal und/oder vertikal angeordnete Separatorwände erfolgen. Zudem können die Einströmkanäle derart ausgelegt sein, dass die Ausströmgeschwindigkeit an jeder Stelle der Einströmdüse gleich ist. Dabei wird vorteilhafterweise die Düsenbreite so gewählt, dass sie zu einem auf der gesamten Bauplattform homogen verteilten Strömungsfeld des Prozessgases führt. Dadurch ergibt sich insgesamt eine Verbesserung der Homogenität des Strömungsfelds des Prozessgases innerhalb des Bauraums und insbesondere oberhalb der Bauplattform der Vorrichtung. In einer weiteren vorteilhaften Ausgestaltung der oberen Einströmdüse umfasst diese mindestens eine Durchtrittsöffnung für einen Hochenergiestrahl, insbesondere einen Laser- oder Elektronenstrahl oder einen Lichtstrahl, insbesondere einen UV-Lichtstrahl. Die Strömung des Prozessgases wird dabei wiederum in der Einströmdüse durch Separatorwände aufgeteilt und in Richtung der Bauplattform gelenkt. Insbesondere wird der Gasstrom bei einer seitlichen Anordnung der oberen Einströmdüse um ca. 90° nach unten in Richtung der Bauplattform gelenkt. Eine derartige Ausgestaltung der oberen Einströmdüse ermöglicht wiederum eine kompakte Ausgestaltung der Vorrichtung insgesamt.

In weiteren vorteilhaften Ausgestaltungen der erfindungsgemäßen Vorrichtung ist der Werkstoff pulverförmig, flüssig oder pastös ausgebildet und besteht aus Metall, einer Metalllegierung, Keramik oder Kunststoff oder einer Mischung daraus. Es ist aber auch möglich weitere, verfestigbare Werkstoffe innerhalb der erfindungsgemäßen Vorrichtung zur Herstellung oder Reparatur eines dreidimensionalen Objekts zu verwenden. Bei dem dreidimensionalen Objekt kann es sich insbesondere um ein Bauteil oder einen Bauteilbereich eines Flugtriebwerks, insbesondere eines Verdichters oder einer Turbine, handeln.

Des Weiteren bestehen die Möglichkeiten, dass die mindestens eine Einströmdüse in einem der Bauplattform gegenüberliegenden oberen Bereich und/oder einer Seitenwand der Vorrichtung angeordnet ist. Die sich aus der Verwendung der Vorrichtung gemäß dem ersten Erfindungsaspekt ergebenden Merkmale und Vorteile sind den Beschreibungen des ersten Erfindungsaspekts zu entnehmen.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Darstellung einer Vorrichtung zur Herstellung oder Reparatur eines dreidimensionalen Objekts;
- Fig. 2a: eine schematische Darstellung einer Absaugdüse gemäß dem Stand der Technik;
- Fig. 2b: eine schematische Darstellung einer Absaugdüse gemäß einer Ausführungsform zur Verwendung in der Vorrichtung;
- Fig. 3a: eine schematische Darstellung einer Absaugdüse gemäß dem Stand der Technik;
- Fig. 3b: eine schematische Darstellung einer Absaugdüse gemäß einer ersten Ausführungsform zur Verwendung in der erfindungsgemäßen Vorrichtung;
- Fig. 4: eine schematische Darstellung einer Absaugdüse gemäß einer zweiten Ausführungsform zur Verwendung in der erfindungsgemäßen Vorrichtung;
- Fig. 5: eine schematische Darstellung einer Absaugdüse gemäß einer dritten Ausführungsform zur Verwendung in der erfindungsgemäßen Vorrichtung;
- Fig. 6: eine schematische Schnittdarstellung einer Einströmdüse gemäß einer ersten Ausführungsform zur Verwendung in der erfindungsgemäßen Vorrichtung;
- Fig. 7: eine schematische Schnittdarstellung einer Einströmdüse gemäß einer zweiten Ausführungsform zur Verwendung in der erfindungsgemäßen Vorrichtung;
- Fig. 8: eine schematische Darstellung einer Einströmdüse gemäß einer dritten Ausführungsform zur Verwendung in der erfindungsgemäßen Vorrichtung;
- Fig. 9: eine schematische, teilweise geschnittene seitliche Darstellung einer Einströmdüse gemäß einer vierten Ausführungsform zur Verwendung in der erfindungsgemäßen Vorrichtung;
- Fig. 10: eine schematische Schnittdarstellung der Einströmdüse gemäß Figur 9; und
- Fig. 11: eine schematisch dargestellte Ansicht der Einströmdüse gemäß Figur 9.

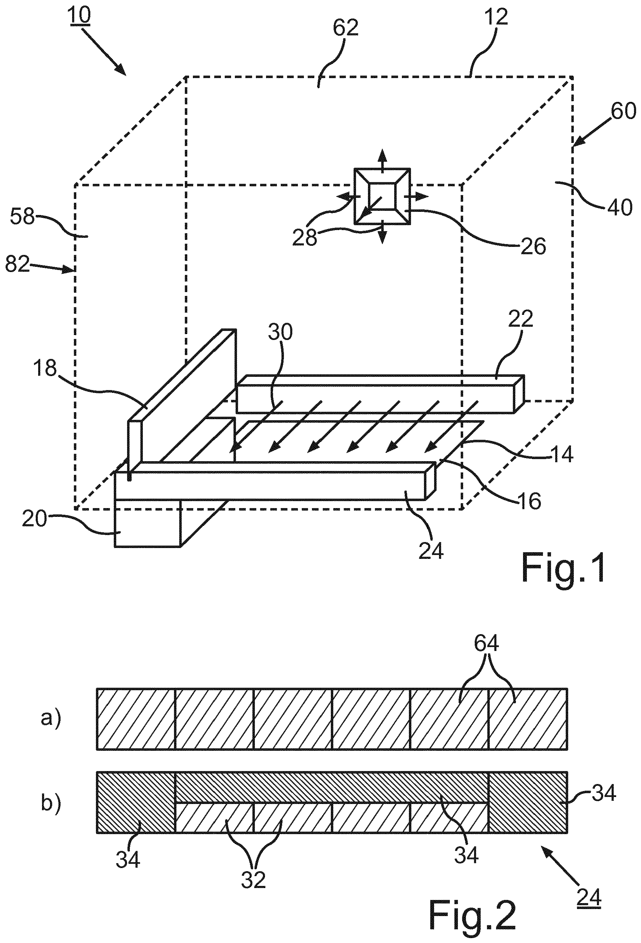

Fig. 1 zeigt eine schematisch dargestellte Vorrichtung 10 zur generativen Herstellung oder generativen Reparatur eines dreidimensionalen Objekts (nicht dargestellt). Bei dem dreidimensionalen Objekt kann es sich beispielhaft um ein Bauteil einer Strömungsmaschine handeln. Insbesondere kann es sich dabei um ein Bauteil einer Turbine oder eines Verdichters eines Flugtriebwerks handeln. Die Vorrichtung 10 weist dabei einen Beschichter 18 zum Auftrag von mindestens einer Pulverschicht eines Bauteilwerkstoffs auf zumindest eine Aufbau- und Fügezone 16 einer absenkbaren Bauplattform 14 auf. Der Beschichter 18 ist mittels einer Verfahreinheit (nicht dargestellt) innerhalb eines Bauraums 12 der Vorrichtung 10 verfahrbar. Die Bewegung des Beschichters 18 erfolgt dabei über und entlang der Bauplattform 14 beziehungsweise der Aufbau- und Fügezone 16, so dass ein gleichmäßiger und schichtweiser Auftrag des pulverförmigen Bauteilwerkstoffs auf die Bauplattform 14 möglich ist.

Der Bauteilwerkstoff (nicht dargestellt) ist in dem beschriebenen Ausführungsbeispiel pulverförmig ausgebildet. Insbesondere handelt es sich um ein Pulver aus Metall oder einer Metalllegierung. Es besteht aber auch die Möglichkeit, dass in anderen Ausführungsbeispielen weitere Werkstoffe wie zum Beispiel Keramik oder Kunststoff oder eine Mischung aus Metall, Metalllegierung, Keramik oder Kunststoff verwendet wird. Zudem besteht die Möglichkeit, dass der Werkstoff nicht nur pulverförmig, sondern auch pastös oder flüssig aufgebildet sein kann. Gegebenenfalls werden bei Verwendung derartiger Bauteilwerkstoffe andere Auftragsverfahren mittels des Beschichters angewandt.

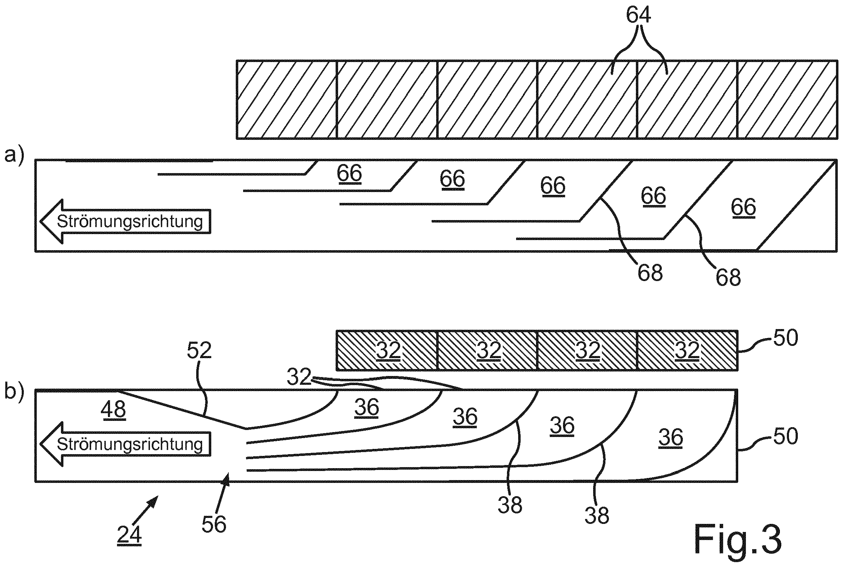

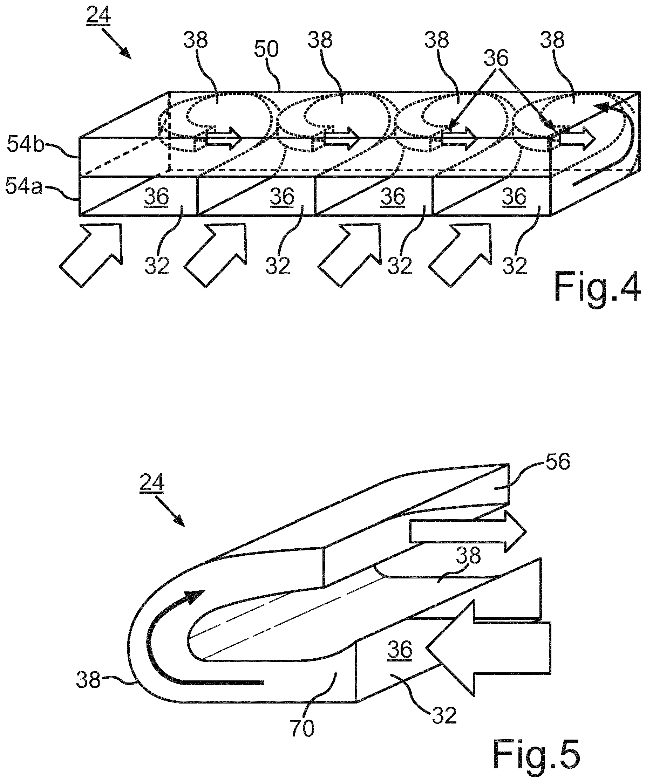

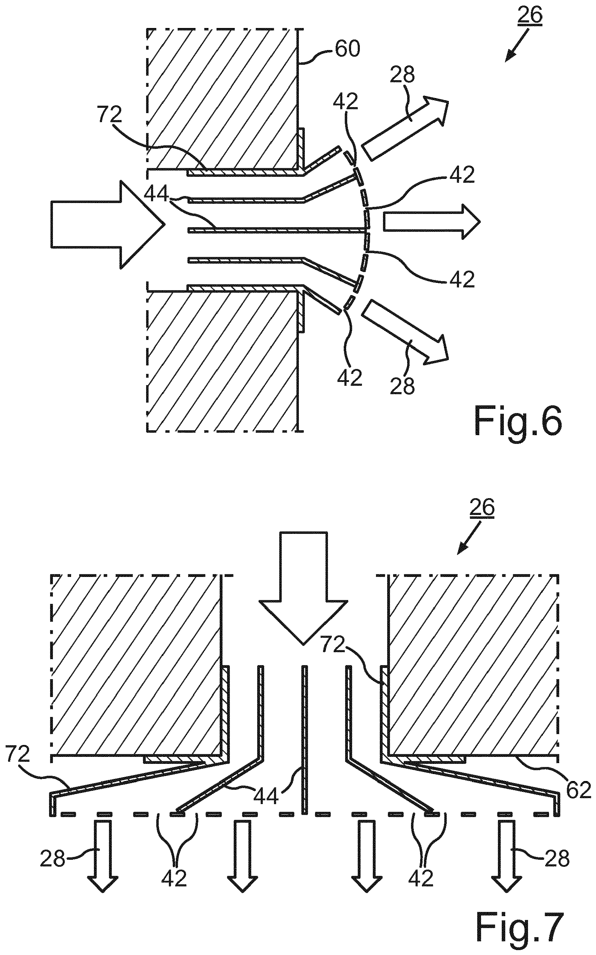

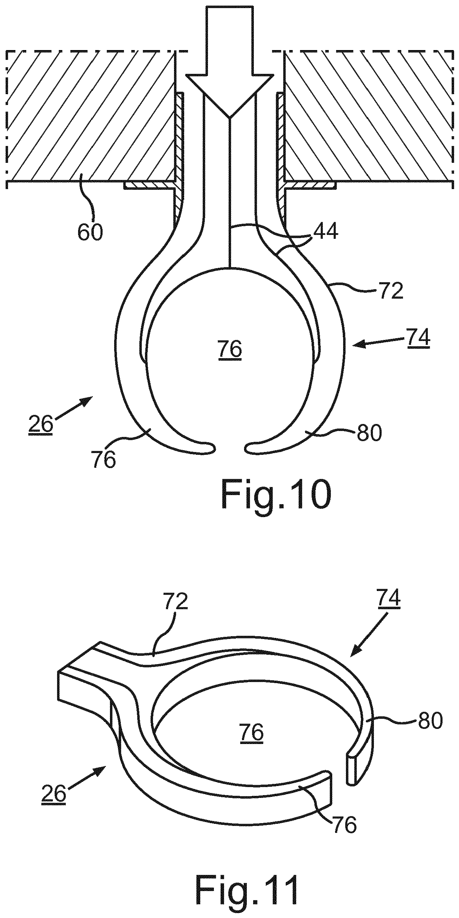

Die Vorrichtung 10 umfasst des Weiteren mindestens eine Strahlungsquelle (nicht dargestellt) zum Erzeugen eines Hochenergiestrahls 46 (siehe auch Figur 10), mittels welchem die Pulverschicht im Bereich der Aufbau- und Fügezone 16 lokal unter Ausbildung eines Schmelzbades zu einer Bauteilschicht verschmelzbar und/oder versinterbar ist. In dem dargestellten Ausführungsbeispiel handelt es sich bei dem Hochenergiestrahl 46 um einen Laserstrahl. Es ist aber auch denkbar Elektronenstrahlen oder neben Hochenergiestrahlen auch Lichtstrahlen, insbesondere UV-Lichtstrahlen zu verwenden. Des Weiteren umfasst die Vorrichtung 10 zwei Einströmdüsen 22, 26. Über die Einströmdüsen 22, 26 wird ein Prozessgas in den Bauraum 12 beziehungsweise die Prozesskammer der Vorrichtung 10 eingeleitet. Bei dem Prozessgas handelt es sich insbesondere um ein Schutz- oder Inertgas. Die Vorrichtung 10 umfasst in dem dargestellten Ausführungsbeispiel eine obere Einströmdüse 26 und eine unterhalb, das heißt näher zur Bauplattform 14 positionierte untere Einströmdüse 22. Die untere Einströmdüse 22 ist als Einströmleiste mit einer Vielzahl von Einströmöffnungen (nicht dargestellt) ausgebildet und ist wie die obere Einströmdüse 26 an einer seitlich ausgebildeten Seitenwand bzw. Rückwand 60 des Bauraums 12 angeordnet. Die Ausgestaltungsmöglichkeiten der oberen Einströmdüse 26 sind in den Figuren 6 bis 11 dargestellt. Zudem umfasst die Vorrichtung 10 mindestens eine Absaugdüse 24 zur Absaugung des Prozessgases. Die Absaugdüse 24 ist als Absaugleiste mit einer Vielzahl von Absaugöffnungen 32 (siehe auch Figuren 3b und 4) ausgebildet. Die Ausgestaltungsmöglichkeiten der Absaugdüse 24 sind in den Figuren 3b, 4 und 5 dargestellt. Zwischen der unteren Einströmdüse 22 und der Absaugdüse 24 wird ein zumindest teilweise über der Bauplattform 14 und der Aufbau- und Fügezone 16 verlaufender Gasstrom 30 ausgebildet. Dabei sind die untere Einströmdüse 22 und die Absaugdüse 24 in ungefähr gleicher Höhe über Bauplattform 14 und der Aufbau- und Fügezone 16 angeordnet. Zwischen der oberen Einströmdüse 26 und der Absaugdüse 24 wird ebenfalls ein zumindest teilweise über der Bauplattform 14 und der Aufbau- und Fügezone 16 verlaufender Gasstrom 28 ausgebildet. Der Bauraum 12 wird durch Seitenwände 40, 82, eine Vorderwand 58 und die Rückwand 60 sowie einer oberen Abschlußwand 62 begrenzt. Des Weiteren erkannt man, dass neben der Bauplattform 14 ein Überlaufbehälter 20 zur Aufnahme von überschüssigem Werkstoff angeordnet ist. Dabei wird der überschüssige Werkstoff mittels des Beschichters 18 beziehungsweise einer an dem Beschichter 18 angeordneten Klinge (nicht dargestellt) von der Bauplattform 14 in den Überlaufbehälter 20 verbracht.

Das Verhältnis der Summen der strömungstechnisch relevanten Querschnittsflächen der Absaugdüse 24 zu den Einströmdüsen 22, 26 beträgt 2,5 : 1 bis 0,3 : 1. Dies wird über eine deutliche Verringerung der Summe der strömungstechnisch relevanten Querschnittsflächen, nämlich den Absaugöffnungen 32 der Absaugdüse 24 erzielt. Durch eine derartige Ausgestaltung der Absaugdüse 24 ergibt sich zudem ein Verhältnis der effektiven Strömungsgeschwindigkeiten der Absaugdüse 24 zu den Einströmdüsen 22, 26 von 2,5 : 1 bis 0,3 : 1.

Fig. 2a zeigt eine schematische Darstellung einer Absaugdüse gemäß dem Stand der Technik. Man erkennt die Ausgestaltung sowie die Fläche der Absaugöffnungen 64. In Fig. 2b ist im Vergleich dazu die Absaugdüse 24 gemäß einer Ausführungsform zur Verwendung in der Vorrichtung 10 schematisch dargestellt. Man erkennt, dass die Absaugdüse 24 mehrere Absaugöffnungen 32 umfasst, wobei ein Teilbereich der Absaugöffnungen 32 mittels den Abdeckungen 34 verschlossen sind. Die Abdeckungen 34 bestehen in dem dargestellten Ausführungsbeispiel aus einer Klebefolie. Durch die zumindest teilweise Abdeckung der Absaugöffnungen 32 ergibt sich im Vergleich zu der in Fig. 2a dargestellten Absaugdüse gemäß dem Stand der Technik eine deutliche Verringerung der strömungstechnisch relevanten Querschnittsfläche der Absaugdüse 24. In dem dargestellten Ausführungsbeispiel sind ca. 66 % der ursprünglichen Absaugöffnungen 64 abgedeckt, sodass es zu einer ungefähr dreifachen Erhöhung der Strömungsgeschwindigkeit an der Absaugung kommt. Im Vergleich zu der in Fig. 2a dargestellten bekannten Absaugdüse sind bei der in Fig. 2b dargestellten Absaugdüse 24 die beiden äußeren Absaugöffnungen 32 sowie jeweils die Hälfte der inneren vier Absaugöffnungen 32 abgedeckt.

Fig. 3a zeigt eine schematische Darstellung der in Fig. 2a dargestellten Absaugdüse gemäß dem Stand der Technik, wobei zudem eine schematisch dargestellte und geschnittene Draufsicht dargestellt ist. Man erkennt, dass die Absaugöffnungen 64 strömungsleitend mit entsprechenden Strömungskanälen 66 verbunden sind. Die die Strömungskanäle 66 ausbildenden Wände 68 weisen dabei einen zumindest teilweise eckigen beziehungsweise geknickten Verlauf auf.

Im Gegensatz dazu zeigt die Fig. 3b in einer schematischen Darstellung die Absaugdüse 24 gemäß einer ersten Ausführungsform zur Verwendung in der Vorrichtung 10. Man erkennt zunächst die im Vergleich zu der bekannten Absaugdüse gemäß Fig. 3a verkleinerten Querschnittsflächen der Absaugöffnungen 32. Zudem wird in der ebenfalls beigefügten schematisch dargestellten und geschnittenen Draufsicht auf die Absaugdüse 24 deutlich, dass innerhalb eines Gehäuses 50 der Absaugdüse 24 wiederum Strömungskanäle 36 ausgebildet sind, die mit den entsprechenden Absaugöffnungen 32 strömungsleitend verbunden sind. Die Strömungskanäle 36 werden dabei durch Wandflächen 38 gebildet und voneinander getrennt, wobei die Wandflächen 38 in Strömungsrichtung zumindest abschnittsweise einen gewölbten Konturverlauf aufweisen. Im Gegensatz zu den in der Fig. 3a gezeigten Wänden 68, sind die Wandflächen 38 nicht geknickt und weisen keine entsprechenden Eckbereiche auf. Die Wandflächen 38 zeigen einen abgerundeten Verlauf, der zu einer deutlichen Reduzierung des Strömungswiderstands innerhalb der Strömungskanäle 36 führt. In dem dargestellten Ausführungsbeispiel enden die Strömungskanäle 36 in einem an ihren Kanalenden 56 gemeinsamen Strömungskanal 48. Durch den Pfeil ist die Strömungsrichtung des Prozessgases angegeben. Die Absaugkanäle 36 sind derart ausgebildet und dimensioniert, dass durch jeden Absaugkanal 36 ein ungefähr gleicher Gasvolumenstrom fließt. Zudem erweitert sich an den Kanalenden 56 der gemeinsame Strömungskanal 48, sodass die Gasströme aus den einzelnen Strömungskanälen 36 gleichmäßig abfließen können.

Eine Art trichterförmige Erweiterung wird ausgehend von den Kanalenden 56 durch eine entsprechend positionierte Kanalwand 52 erzielt.

Fig. 4 zeigt eine schematische Darstellung einer Absaugdüse 24 gemäß einer zweiten Ausführungsform zur Verwendung in der Vorrichtung 10. Man erkennt wiederum die Ausgestaltung von Absaugöffnungen 32, die strömungsleitend mit entsprechenden Strömungskanälen 36 verbunden sind. Die Strömungsrichtung des Gasstroms ist mit den Pfeilen gekennzeichnet. Des Weiteren erkennt man, dass die Absaugkanäle 36 derart ausgebildet sind, dass der abgesaugte Gasstrom in einer Ebene über den Absaugöffnungen 32 abgeleitet wird. Die Absaugöffnungen 32 sind mit einer im Vergleich zu bekannten Absaugdüsen verkleinerten Querschnittsfläche ausgebildet. Die Strömungskanäle 36 werden wiederum durch Wandflächen 38 ausgebildet, die in Strömungsrichtung zumindest abschnittsweise einen gewölbten Konturverlauf aufweisen. Das Gehäuse 50 der Absaugdüse 24 ist in dem dargestellten Ausführungsbeispiel in einen unteren Gehäuseabschnitt 54a und einen oberen Gehäuseabschnitt 54b aufgeteilt, wobei die Absaugkanäle 36 von dem unteren Gehäuseabschnitt 54a in den oberen Gehäuseabschnitt 54b geführt sind. Die gezeigte Absaugdüse 24 ist konstruktiv kompakt ausgebildet.

Fig. 5 zeigt eine schematische Darstellung einer Absaugdüse 24 gemäß einer dritten Ausführungsform zur Verwendung in der Vorrichtung 10. Man erkennt, dass in dieser Darstellung nur ein Strömungskanal 36 einer Absaugöffnung 32 dargestellt ist, wobei die Ausgestaltung des Strömungskanals 36 im Allgemeinen der Ausgestaltung des Strömungskanals 36 gemäß Fig. 4 entspricht. Im Unterschied zu der in Fig. 4 dargestellten Ausführungsform weist die hier gezeigte Absaugdüse einen trichterförmigen Einlass 70 im Bereich in Strömungsrichtung hinter der Absaugöffnung 32 auf. Die Strömungsrichtung des Gasstroms wird hier ebenfalls durch die schwarzen Pfeile dargestellt. Es wird deutlich, dass der Gasstrom auch bei dieser Absaugdüse 24 zunächst nach oben in eine Ebene über der Absaugöffnung 32 geleitet wird.

Fig. 6 zeigt eine schematische Schnittdarstellung einer Einströmdüse 26 gemäß einer ersten Ausführungsform zur Verwendung in der Vorrichtung 10. Die dargestellte Einströmdüse 26 ist dabei in einer Rückwand 60 der Vorrichtung 10 angeordnet und gasleitend mit einer Gasquelle für das Prozessgas, insbesondere ein Schutz- oder Inertgas, verbunden (nicht dargestellt). Die Strömungsrichtung des Gasstroms des Prozessgases ist durch die schwarzen Pfeile dargestellt. Die Einströmdüse 26 stellt eine obere, das heißt ein über einer unteren Einströmdüse 22 (siehe Figur 1) angeordnete, obere Einströmdüse 26 dar. Entsprechendes gilt auch für die in den Figuren 7 bis 11 dargestellten Einströmdüsen 26. Man erkennt, dass die obere Einströmdüse 26 mehrere Einströmöffnungen 42 umfasst, wobei die Einströmöffnungen 42 durch jeweils eine Separatorwand 44 voneinander getrennt sind. Der von der Gasquelle ankommende Gasstrom wird in der oberen Einströmdüse 26 durch die Separatorwände 44 aufgeteilt und in dadurch entstehende, einzelne Kanäle geleitet. Dabei sind die Kanäle derart ausgelegt, dass die Ausströmgeschwindigkeit an jeder Stelle der Einströmdüse 26 ungefähr gleich ist. Die Breite der Einströmdüse 26 ist des Weiteren so gewählt, dass sie auf der gesamten Bauplattform 14 ein möglichst homogenes Strömungsfeld verursacht. Ein Gehäuse 72 der Einströmdüse 26 ist in einer entsprechenden Öffnung der Rückwand 60 fixiert. In Richtung der Einströmöffnungen 42 erweitert sich das Gehäuse 72 im Bauraum 12 fächerförmig.

Fig. 7 zeigt eine schematische Schnittdarstellung einer Einströmdüse 26 gemäß einer zweiten Ausführungsform zur Verwendung in der Vorrichtung 10. Man erkennt wiederum, dass der von der Gasquelle ankommende Gasstrom mittels der Separatorwände 44 aufgeteilt und in entsprechende Strömungskanäle gelenkt wird. Die Strömungsrichtung des Gasstroms ist wiederum mit den Pfeilen angedeutet. In dem hier gezeigten Ausführungsbeispiel ist die Einströmdüse 26 mit einem Teil ihres Gehäuses 72 in einer oberen Abschlusswand 62 des Bauraums 12 fixiert und mit der entsprechenden Gasquelle gasleitend verbunden (vergleiche auch Figur 1). Das Gehäuse 72 erweitert sich in Strömungsrichtung wiederum fächerförmig in den Bauraum 12. Dabei sind die Einströmöffnungen 42 derart ausgebildet und ausgerichtet, dass der Gasstrom 28 in Richtung der Bauplattform 14 gelenkt ist.

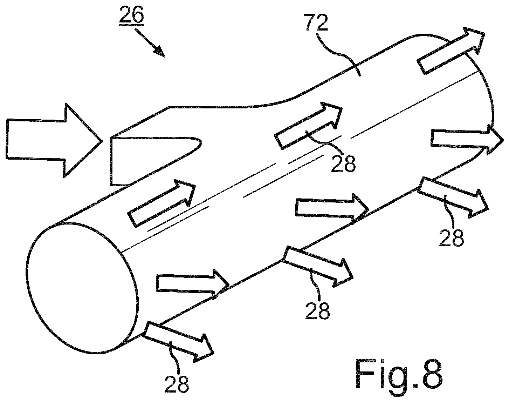

Fig. 8 zeigt eine schematische Darstellung einer Einströmdüse 26 gemäß einer dritten Ausführungsform zur Verwendung in der Vorrichtung 10. Man erkennt, dass das Gehäuse 72 in der Aufsicht ungefähr T-förmig ausgebildet ist, wobei ein Bereich des Gehäuses 72 wiederum zum Einführen und Fixieren in einer entsprechenden Öffnung einer Seitenwand oder oberen Abschlusswand oder der Rückwand des Bauraums 12 beziehungsweise der Prozesskammer ausgebildet ist (siehe auch Figur 1). Der in den Bauraum 12 ragende Bereich der Einströmdüse 26 ist zylinderförmig ausgebildet und weist eine Vielzahl von Öffnungen auf, durch die der Gasstrom 28 in Richtung der Bauplattform 14 und der entsprechenden Aufbau- und Fügezone 16 der Vorrichtung 10 geleitet wird. Die Einströmöffnungen sowie die im Inneren der Einströmdüse 26 ausgebildeten Separatorwände sind in Fig. 8 nicht dargestellt. Die Strömungsrichtungen sind wiederum durch die Pfeile gekennzeichnet.

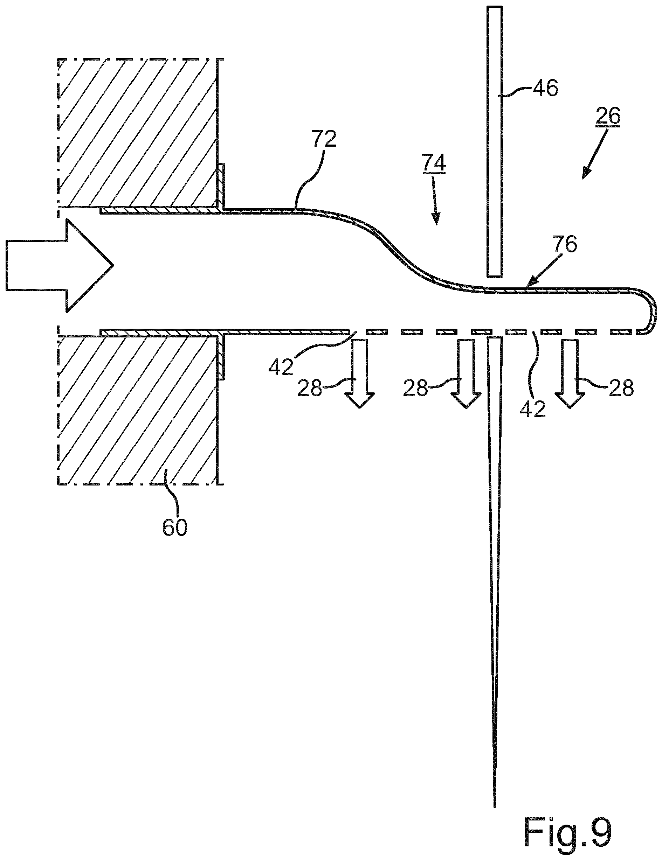

Die Figuren 9 bis 11 zeigen schematische Darstellungen einer Einströmdüse 26 gemäß einer vierten Ausführungsform zur Verwendung in der Vorrichtung 10. Dabei ist in Fig. 9 eine schematische, teilweise geschnittene seitliche Darstellung der Einströmdüse 26 gezeigt. Man erkennt, dass das Gehäuse 72 einerseits wiederum in einer Öffnung der Rückwand 60 fixiert ist. Zudem ist die Einströmdüse 26 wiederum mit einer Gasquelle für das Prozessgas strömungsleitend verbunden (nicht dargestellt). Die Strömungsrichtung des Gasstroms ist mit den Pfeilen angedeutet. Man erkennt, dass der Gasstrom 28 vor seinem Austritt aus der Einströmdüse 26 um ungefähr 90° innerhalb der Einströmdüse 26 umgelenkt wird, sodass der Gasstrom 28 in Richtung der Bauplattform 14 gelenkt ist. Des Weiteren erkennt man, dass der in das Innere des Bauraums 12 beziehungsweise der Prozesskammer der Vorrichtung 10 (siehe Figur 1) ragende Teil 74 der Einströmdüse 26 derart ausgebildet ist, dass ein Hochenergiestrahl 46, nämlich ein Laserstrahl durch die obere Einströmdüse 26 hindurchdringen kann. In Fig. 10, welche eine schematische Schnittdarstellung der Einströmdüse 26 gemäß Fig. 9 darstellt, ist deutlich gemacht, dass in dem Bereich 74 der Einströmdüse 26 eine Durchtrittsöffnung 76 für den Laserstrahl 46 ausgebildet ist. Hierfür ist der in den Bauraum ragender vorderer Abschnitt 74 der Einströmdüse 26 klammerartig und ungefähr kreisförmig ausgebildet und umfasst zwei gebogen ausgebildete Schenkel 78, 80, welche die Durchtrittsöffnung 76 umschließen. Im Inneren der Einströmdüse 26 sind wiederum Separatorwände 44 ausgebildet, die den von der Gasquelle ankommenden Gasstrom (siehe Pfeil) aufteilen und in entsprechende Strömungskanäle in Richtung der Einströmöffnungen 42 leiten. In Fig. 11, die eine weitere schematische Darstellung der Einströmdüse 26 gemäß Fig. 9 darstellt. Es wird die Ausgestaltung und Form der Einströmdüse 26 deutlich.

### Bezugszeichenliste

- 10: Vorrichtung
- 12: Bauraum
- 14: Bauplattform
- 16: Aufbau- und Fügezone
- 18: Beschichter
- 20: Überlaufbehälter
- 22: Untere Einströmdüse
- 24: Absaugdüse
- 26: Obere Einströmdüse
- 28: Gasstrom
- 30: Gasstrom
- 32: Absaugöffnung
- 34: Abdeckung
- 36: Absaugkanal
- 38: Wandflächen
- 40: Seitenwand
- 42: Einströmöffnung
- 44: Separatorwand
- 46: Hochenergiestrahl
- 48: Strömungskanal
- 50: Gehäuse
- 52: Kanalwand
- 54a: Gehäuseabschnitt
- 54b: Gehäuseabschnitt
- 56: Kanalende
- 58: Seitenwand
- 60: Rückwand
- 62: Obere Abschlusswand
- 64: Absaugöffnung
- 66: Strömungskanal
- 68: Wände
- 70: Einlass
- 72: Gehäuse
- 74: Gehäuseabschnitt
- 76: Durchtrittsöffnung
- 78: Schenkel
- 80: Schenkel
- 82: Vorderwand

## Patentansprüche

1. Vorrichtung (10) zur Herstellung oder Reparatur eines dreidimensionalen Objekts umfassend:
- mindestens einen Bauraum (12) für ein schichtweises, aufeinanderfolgendes Verfestigen mindestens eines verfestigbaren Werkstoffs in vordefinierten Bereichen zum schichtweisen Aufbau des dreidimensionalen Objekts oder zur schichtweisen Reparatur einzelner Bereiche des dreidimensionalen Objekts innerhalb des Bauraums (12), und
- mindestens eine Einströmdüse (22, 26) und mindestens eine Absaugdüse (24) für ein Prozessgas, wobei die Einströmdüse (22, 26) und die Absaugdüse (24) derart angeordnet sind, dass ein zumindest teilweise über einer im Bauraum (12) ausgebildeten Aufbau- und Fügezone (16) einer Bauplattform (14) verlaufender Gasstrom (30) ausgebildet wird,
wobei das Verhältnis der Summen der strömungstechnisch relevanten Querschnittsflächen der mindestens einen Absaugdüse (24) zu der mindestens einen Einströmdüse (22, 26) 2,5 : 1 bis 0,3 : 1 beträgt
**dadurch gekennzeichnet, dass**
die Absaugdüse (24) mindestens zwei Absaugöffnungen (32) umfasst, wobei die Absaugöffnungen (32) mit zugehörigen Absaugkanälen (36) strömungsleitend verbunden sind und die Absaugkanäle (36) Wandflächen (38) aufweisen, die in Strömungsrichtung einen zumindest abschnittsweise gewölbten Konturverlauf aufweisen und zumindest abschnittsweise voneinander getrennt sind.

2. Vorrichtung (10) nach Anspruch 1,
**dadurch gekennzeichnet, dass**
das Verhältnis der Summen der strömungstechnisch relevanten Querschnittsflächen der mindestens einen Absaugdüse (24) zu der mindestens einen Einströmdüse (22, 26) 2 : 1 bis 0,5 : 1, insbesondere 1.3 : 1 bis 0,7 : 1, beträgt.

3. Vorrichtung (10) nach Anspruch 1 oder 2,
**dadurch gekennzeichnet, dass**
die mindestens eine Absaugdüse (24) und die mindestens eine Einströmdüse (22, 26) derart ausgebildet sind, dass das Verhältnis der effektiven Strömungsgeschwindigkeiten der mindestens einen Absaugdüse (24) zu der mindestens einen Einströmdüse (22, 26) 2,5 : 1 bis 0,3 : 1 beträgt.

4. Vorrichtung (10) nach Anspruch 3,
**dadurch gekennzeichnet, dass**
das Verhältnis der effektiven Strömungsgeschwindigkeiten der mindestens einnen Absaugdüsen (24) zu der mindestens einen Einströmdüsen (22, 26) 2 : 1 bis 0,5 : 1, insbesondere 1,3 : 1 bis 0,7 : 1, beträgt.

5. Vorrichtung (10) nach einem der vorhergehenden Ansprüche,
**dadurch gekennzeichnet, dass**
die Absaugkanäle (36) derart ausgebildet und dimensioniert sind, dass durch jeden Absaugkanal (36) ein ungefähr gleicher Gasvolumenstrom fließt.

6. Vorrichtung (10) nach einem der vorhergehenden Ansprüche,
**dadurch gekennzeichnet, dass**
die Absaugekanäle (36) derart ausgebildet sind, dass der abgesaugte Gasstrom in einer Ebene über und/oder unter der Absaugöffnung (32) abgeleitet wird.

7. Vorrichtung (10) nach einem der vorhergehenden Ansprüche,
dadurch gekenntzeichnet, dass
die Absaugdüse (24) eine Vielzahl von Absaugöffnungen (32) umfasst, wobei zur Verringerung der strömungstechnisch relevanten Querschnittsfläche an einem Teilbereich der Absaugöffnungen (32) mindestens eine Abdeckung (34) angeordnet ist.

8. Vorrichtung (10) nach einem der vorhergehenden Ansprüche,
dadurch gekenntzeichnet, dass
die Vorrichtung (10) mindestens eine in einem der Bauplattform (14) gegenüberliegenden oberen Bereich und/oder einer Seitenwand (60) der Vorrichtung (10) angeordnete obere Einströmdüse (26) und/oder mindestens eine in einer Seitenwand (60) der Vorrichtung (10) über der Bauplattform (14) und unterhalb der oberen Einströmdüse (26) angeordnete untere Einströmdüse (22) umfasst.

9. Vorrichtung (10) nach Anspruch 8,
dadurch gekenntzeichnet, dass
die obere Einströmdüse (26) mindestens zwei Einströmöffnungen (42) umfasst, wobei die Einströmöffnungen (42) durch mindestens eine Separatorwand (44) voneinander getrennt sind.

10. Vorrichtung (10) nach Anspruch 9,
dadurch gekenntzeichnet, dass
die Einströmöffnungen (42) derart ausgebildet und ausgerichtet sind, dass ein Gasstrom (28) in Richtung der Bauplattform (14) gelenkt ist.

11. Vorrichtung (10) nach einem der Ansprüche 8 bis 10,
dadurch gekenntzeichnet, dass
die obere Einströmdüse (26) mindestens eine Durchtrittsöffnung (76) für einen Hochenergiestrahl (46), insbesondere einen Laser- oder Elektronenstrahl, oder Lichtstrahl, insbesondere einen UV-Lichtstrahl, aufweist.

## Claims

1. A device (10) for producing or repairing a three-dimensional object, comprising:
- at least one construction space (12) for a layer-by-layer, successive solidification of at least one material, which can be solidified in predefined regions for the layer-by-layer buildup of the three-dimensional object or for the layer-by-layer repair of individual regions of the three-dimensional object within the construction space (12), and
- at least one inlet nozzle (22, 26) and at least one exhaust nozzle (24) for a process gas, wherein the inlet nozzle (22, 26) and the exhaust nozzle (24) are arranged such that a gas stream (30) is formed, extending at least partially via a buildup and joining zone (16) of a construction platform (14) which is formed in the construction space (12), wherein the ratio of the totals of the fluidically relevant cross-sectional areas of the at least one exhaust nozzle (24) in relation to the at least one inlet nozzle (22, 26) is 2.5:1 to 0.3:1
**characterized in that** the exhaust nozzle (24) comprises at least two exhaust openings (32), wherein the exhaust openings (32) are fluidically connected to associated exhaust ducts (36) and the exhaust ducts (36) have wall surfaces (38), which have an at least sectionally curved contour profile in the flow direction and are at least sectionally separated from one another.

2. The device (10) as claimed in claim 1,
**characterized in that** the ratio of the totals of the fluidically relevant cross-sectional areas of the at least one exhaust nozzle (24) in relation to the at least one inlet nozzle (22, 26) is 2:1 to 0.5:1, in particular 1.3:1 to 0.7:1.

3. The device (10) as claimed in claim 1 or 2,
**characterized in that** the at least one exhaust nozzle (24) and the at least one inlet nozzle (22,26) are formed such that the ratio of the effective flow velocities of the at least one exhaust nozzle (24) in relation to the at least one inlet nozzle (22, 26) is 2.5:1 to 0.3:1.

4. The device (10) as claimed in claim 3,
**characterized in that** the ratio of the effective flow velocities of the at least one exhaust nozzle (24) in relation to the at least one inlet nozzle (22, 26) is 2:1 to 0.5:1, in particular 1.3:1 to 0.7:1.

5. The device (10) as claimed in any one of the preceding claims, **characterized in that** the exhaust ducts (36) are formed and dimensioned such that an approximately equal gas volume stream flows through each exhaust duct (36).

6. The device (10) as claimed in any one of the preceding claims,
**characterized in that** the exhaust ducts (36) are formed such that the exhausted gas stream is discharged into a plane above and/or below the exhaust opening (32).

7. The device (10) as claimed in any one of the preceding claims,
**characterized in that** the exhaust nozzle (24) comprises a plurality of exhaust openings (32), wherein at least one cover (34) is arranged on a subregion of the exhaust openings (32) to reduce the fluidically relevant cross-sectional area.

8. The device (10) as claimed in any one of the preceding claims,
**characterized in that** the device (10) comprises at least one upper inlet nozzle (26), which is arranged in an upper region opposite to the construction platform (14) and/or a side wall (60) of the device (10), and/or at least one lower inlet nozzle (22), which is arranged in a side wall (26) of the device (10) above the construction platform (14) and below the upper inlet nozzle (26).

9. The device (10) as claimed in claim 8,
**characterized in that** the upper inlet nozzle (26) comprises at least two inlet openings (42), wherein the inlet openings (42) are separated from one another by at least one separator wall (44).

10. The device (10) as claimed in claim 9,
**characterized in that** the inlet openings (42) are formed and aligned such that a gas stream (28) is guided in the direction of the construction platform (14).

11. The device (10) as claimed in any one of claims 8 to 10,
**characterized in that** the upper inlet nozzle (26) has at least one passage opening (76) for a high-energy beam (46), in particular a laser or electron beam, or a light beam, in particular a UV light beam.

## Revendications

1. Dispositif (10) de fabrication ou de réparation d'un objet tridimensionnel comprenant :
- au moins un espace de construction (12) pour une solidification successive par couche d'au moins un matériau solidifiable dans des zones prédéfinies pour la construction par couche de l'objet tridimensionnel ou pour la réparation par couche de zones individuelles de l'objet tridimensionnel à l'intérieur de l'espace de construction (12), et
- au moins une buse d'admission (22, 26) et au moins une buse d'aspiration (24) pour un gaz de processus, dans lequel la buse d'admission (22, 26) et la buse d'aspiration (24) sont agencées de façon à ce qu'un courant de gaz (30) s'écoulant au moins en partie au-dessus d'une zone de construction et d'assemblage (16) d'une plateforme de construction (14) réalisée dans la zone de construction (12) est formé,
dans lequel le rapport des sommes des sections transversales importantes du point de vue de la technique des fluides de l'au moins une buse d'aspiration (24) par rapport à l'au moins une buse d'admission (22, 26) est de 2,5 : 1 à 0,3 : 1
**caractérisé en ce que**
la buse d'aspiration (24) comprend au moins deux ouvertures d'aspiration (32), dans lequel les ouvertures d'aspiration (32) sont reliées en conduction fluidique à des canaux d'aspiration (36) afférents et les canaux d'aspiration (36) présentent des surfaces de paroi (38), qui présentent un contour courbe au moins par section dans le sens d'écoulement et sont séparées l'une de l'autre au moins par section.

2. Dispositif (10) selon la revendication 1,
**caractérisé en ce que**
le rapport des sommes des sections transversales importantes du point de vue de la technique des fluides de l'au moins une buse d'aspiration (24) par rapport à l'au moins une buse d'admission (22, 26) est de 2 : 1 à 0,5 : 1, en particulier de 1,3 : 1 à 0,7 : 1.

3. Dispositif (10) selon la revendication 1 ou 2,
**caractérisé en ce que**
l'au moins une buse d'aspiration (24) et l'au moins une buse d'admission (22, 26) sont réalisées de telle sorte que le rapport des vitesses d'écoulement effectives de l'au moins une buse d'aspiration (24) par rapport à l'au moins une buse d'admission (22, 26) est de 2,5 : 1 à 0,3 : 1.

4. Dispositif (10) selon la revendication 3,
**caractérisé en ce que**
le rapport des vitesses d'écoulement effectives de l'au moins une buse d'aspiration (24) par rapport à l'au moins une buse d'admission (22, 26) est de 2 : 1 à 0,5 : 1, en particulier de 1,3 : 1 à 0,7 : 1.

5. Dispositif (10) selon l'une quelconque des revendications précédentes,
**caractérisé en ce que**
les canaux d'aspiration (36) sont réalisés et dimensionnés de telle sorte qu'un débit volumique de gaz approximativement égal s'écoule à travers chaque canal d'aspiration (36).

6. Dispositif (10) selon l'une quelconque des revendications précédentes,
**caractérisé en ce que**
les canaux d'aspiration (36) sont réalisés de telle sorte que le courant de gaz aspiré dans un niveau au-dessus et/ou en dessous de l'ouverture d'aspiration (32) est évacué.

7. Dispositif (10) selon l'une quelconque des revendications précédentes,
**caractérisé en ce que**
la buse d'aspiration (24) comprend une pluralité d'ouvertures d'aspiration (32), dans lequel au moins un recouvrement (34) est agencé au niveau d'une zone partielle des ouvertures d'aspiration (32) pour la réduction de la section transversale importante du point de vue de la technique des fluides.

8. Dispositif (10) selon l'une quelconque des revendications précédentes,
**caractérisé en ce que**
le dispositif (10) comprend au moins une buse d'admission supérieure (26) agencée dans une zone supérieure faisant face à la plateforme de construction (14) et/ou dans une paroi latérale (60) du dispositif (10) et/ou au moins une buse d'admission inférieure (22) agencée dans une paroi latérale (60) du dispositif (10) au-dessus de la plateforme de construction (14) et sous la buse d'admission supérieure (26).

9. Dispositif (10) selon la revendication 8,
**caractérisé en ce que**
la buse d'admission supérieure (26) comprend au moins deux ouvertures d'admission (42), dans lequel les ouvertures d'admission (42) sont séparées l'une de l'autre par au moins une paroi de séparation (44).

10. Dispositif (10) selon la revendication 9,
**caractérisé en ce que**
les ouvertures d'admission (42) sont réalisées et orientées de telle sorte qu'un courant de gaz (28) est dirigé en direction de la plareforme de construction (14).

11. Dispositif (10) selon l'une quelconque des revendications 8 à 10,
**caractérisé en ce que**
la buse d'admission supérieure (26) présente au moins une ouverture de passage (76) pour un faisceau de haute énergie (46), en particulier un faisceau laser ou d'électron, ou un faisceau de lumière, en particulier un faisceau de lumière UV.
